(19) Europäisches Patentamt

European Patent Office

Office européen des brevets

(11) **EP 1 353 521 A1**

(12) **EUROPEAN PATENT APPLICATION**

(43) Date of publication:
**15.10.2003 Bulletin 2003/42**

(51) Int Cl.$^7$: **H04Q 7/32**

(21) Application number: **02360118.0**

(22) Date of filing: **10.04.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Drevon, Nicolas**<br>**75016 Paris (FR)** |
| (71) Applicant: **Evolium S.A.S.**<br>**75008 Paris (FR)** | (74) Representative:<br>**Kugler, Hermann, Dipl.-Phys. et al**<br>**Alcatel**<br>**Intellectual Property Department, Stuttgart**<br>**70430 Stuttgart (DE)** |
| (72) Inventors:<br>• **Bourdeaut, Stanislas**<br>**75015 Paris (FR)** | |

(54) **A method of selecting one base station, a mobile phone and a base station**

(57) For cell reselection by a mobile station when PLMNs of different operatos are available, in accordance with 3GPP TS 43.022, it is needed that the mobile station gets information enabling it to select an "equivalent cell".

According to the invention a list of PLMN-ids of all receivable base station is broadcast in such a format that the mobile station can simply and quickly retrieve the needed criteria for the cell reselection.

EP 1 353 521 A1

## Description

Technical Field of the Invention

The invention relates to a method of selecting one base station out of the number of all base stations receivable by a mobile station being in position to possibly select such base station, when not all said base stations are operated by one and the same operator, a mobile phone and a base station.

Discussion of Related Art

In the new regulatory and commercial situation with both GSM and UMTS networks, it will be necessary for a mobile station, in the following called MS, to treat selected PLMNs with different PLMN identifications (PLMN-ids) as equivalent to each other at PLMN selection, handover, cell re-selection, etc. PLMN here means Public Land Mobile Network and is the sum of all parts of a network of a certain operator. Such PLMN especially includes a number of base stations. Such base station, in the following called a BS, is intended to offer communication's connections to a multiple of mobile stations. As there is not only one operator but a number of operators most locations belong to more than one such PLMN and, consequently, normally more than one BS is offering communication's connections to the MSs in its area.

Each (owner of an) MS has a contract with (at least) one of said operators, his home operator with his Home Public Land Mobile Network HPLMN. When leaving this HPLMN, an MS can only have communication's connections via BSs of other PLMNs. Such leaving an HPLMN is called roaming. The operators provide another possibility, which is considered here, i.e., the possibility to nevertheless have communication's connections is to have contracts with other operators too and being able to select another PLMN as the actual HPLMN. Each operator may have contracts with other operators to accept the clients of the other operator like or similar to an own client. Normally this is done mutually.

Each BS distributes lists of all BSs receivable by an MS in its area. It is known to designate the PLMNs of the BSs in such list by indicating their PLMN-ids . A PLMN-id consists of three bytes. Additionally, each MS contacting a BS is notifying an identifier of its home operator to said BS.

If an MS trying to contact a BS subsequently monitors all the BSs which are receivable until finding one which by contracts is foreseen to be contacted, this will take too much time.

When the MS is camping on BCCH (Broadcast Control Channel), the MS needs to decode the neighbour target cell system information before attempting to reselect it, then it may retrieve the neighbour PLMN-id in the neighbour cell system information. However, the MS then has to decode information in the the neighbour cells.

The PBCCH (Packet Broadcast Control Channel), which already exists, aims at preventing the MS from decoding information in the neighbour cell, providing it with the needed information before reselecting a neighbour cell.

Then when the MS is GPRS attached and is camping on PBCCH it should benefit from the neighbour cell list which is broadcast in Packet System Information and it should not have to decode the PLMN-Id of the Neighbour cells in the Neighbour cells. Then, the MS should be provided with the neighbour PLMN-ids on the serving PBCCH.

Note: the System Information type 2 quater (on BCCH), which already exists, also aims at preventing the MS from decoding information in the neighbor cells, providing it with the needed information before reselecting a neighbor cell.

Then the invention could also apply on BCCH, which would require that we create a new System Information.

Summary of the Invention

According to the invention the problems are overcome by a method according to the teaching of claim 1.

According to the invention the problems are further overcome by a mobile phone, commonly called a mobile station MS, able to select one base station out of the number of all base stations receivable by said mobile station, according to the teaching of claim 3.

According to the invention the problems are further overcome by a base station able to offer communication's connections to a multiple of mobile stations according to the teaching of claim 2.

Corresponding solutions for different environments are claimed in claims 4to 6 and 7 to 9, respectively.

Detailed Description of Preferred Embodiments

**Solution 1 for GSM-to-GSM cell reselection: PLMN-id list based on NCC broadcast on PBCCH**

A list of the PLMN identifications (PLMN-ids) is broadcast by a base station serving a mobile station, called MS, to this mobile station.

This list is sent as part of the Packet System Information PSI. The signalling of the PLMN-ids relies, according to the invention, on the Network Color Codes NCC: The MS shall benefit from the NCC, which is already broadcast in the Packet System Information type 3, to retrieve the PLMN identifcation of each neighbour cell. For this purpose, the list of PLMNs is ordered and indexed like their NCCs. For example: It is arranged so that the position of a PLMN-id on the list corresponds to the respective Network Color Code NCC allocated to that PLMN.

The invention makes use of the fact that in a given cell, an NCC represents a unique PLMN. It requires that, in a given cell, there are no more than 8 declared neighbour PLMNs. In that way, the neighbour PLMNs can be declared in a new Packet System Information, so that this signalling is backward compatible.

An MS filters from the received list of PLMN-ids those PLMNs that it should monitor. Such filtering uses the NCCs which are present in that MS, as they are included in the base station identification codes (BSIC) of neighbour cells received by that MS from a serving base station.

The same MS should have already received the list of Equivalent PLMNs from the MSC/VLR during MM procedures. Using this information as well as the NCCs, the MS derives from the the PLMN-id of each neighbour cell, and it can then apply the criteria specified by 3GPP TS 43.022 in order to choose a suitable cell.

In PSI xx, the following coding is proposed:
{ 00| 01 | 1 < PLMN-Id : bit (24) > }*8.

The "00" choice indicates that the current cell belongs to the same PLMN as the preceding one.

The "01" choice indicates that no PLMN-id code is specified for this NCC.

One instance of the new Packet System Information (PSI type xx) may include up to 6 PLMN-ids (one PLMN-id fits into 3 octets). The PLMN-ids shall be ordered and indexed by their NCC value.

For instance, the 8 NCC values may be associated to their PLMN-id code within only one 154 bits long message, provided we have 6 explicit PLMN-ids codes and 2 "00" choices.

Several instances of the new Packet System Information may be broadcast if the PLMN-id list does not fit in one message; nevertheless, the information to describe 8 different PLMN-ids should fit within 200 bits, i.e. in 2 messages.

Note: a new System Information on BCCH could also be created and could provide the PLMN-ids using the same solution. The PLMN-id list can be broadcast following the same principles also in a new System Information, on BCCH. Indeed, on BCCH, the network also broadcasts the list neighbor cells with their BSIC (including NCC).

**Solution 2 for GSM-to-3G cell reselection for the case of coordinated frequencies of the 3G PLMNs:**

**PLMN-id list based on Reduced PLMN-ids broadcast on PCBCCH (or BCCH):**

The following solution is foreseen for the case that the 3G (e.g. UMTS) PLMNs share the frequencies available for 3G PLMNs in a coordinated manner, that means in such a way that different 3G PLMNs in a same geographical location use different frequencies.

If in such environment an MS is to change from a GSM PLMN to a 3G (e.g. UMTS) PLMN a similar solution as the one desribed above is used in order to enable the MS to derive the PLMN-id of the 3G neighbor cells. A 3G cell is identified by with a Primary Scrambling code and a (FDD or TDD) central frequency. The 3G neighbour cell list is broadcast in PSI3 Quarter and is ordered.

According to the invention, the network broadcasts a list of PLMN-ids, which represent the 3G PLMNs available in the servings cell of the MS code and which is ordered so that the PLMN of each cell may be retrieved by the MS. For this purpose the broadcast list of of neighbor cells received by that MS from a serving base station is ordered in the same order as the 3G neighbor cell list, which is received by an MS from its serving base station.

In order to need only a low number of bits for representing the PLMN-ids to be broadcast and since, in a given cell, there will be no more than 8 neighbour PLMNs the idea is to use Reduced_PLMN-Ids.As explained above, the filtering of the receivable base stations out of the list of PLNM-ids, here Reduced_PLMN-Ids, takes into account the information about neighbour cells received by that MS from a serving base station and a list of Equivalent PLMNSs already present in the MS.

The Reduced_PLMN-Ids should be sent in a new Packet System Information (PSI xy), which needs to be decoded only by 3G capable MS. PSI xy shall contain the ordered list of 3G PLMNs, and the ordered list of Reduced_PLMN-Ids . The index of a 3G PLMN corresponds to a Reduced_PLMN-Id, and the ordered list of Reduced_PLMN-Id is indexed with the 3G cells indexes so that 3G cell number N is associated to Reduced_PLMN-ld number N which refers to PLMN number Reduced_PLMN-Id.

Since consecutive cells are likely to belong to the same PLMN, a single bit should indicate that consecutive PLMNs are the same. Then the following coding is proposed:
Number of SGPLMNs : bits (3)
{ < PLMN-Id : bit (24) > }* val (Number of 3GPLMNs) so that 6 PLMN-ids are coded in 150 octets.
{ 0 | 1 < Reduced_PLMN-Id : bit (3) > }* number of 3G neighbor cell.

The choice "0" allows to indicate that the PLMN-id is the same as the previous one.

Since we may have up to 96 3G neighbor cells, the PSI xy may contain:

$$6 \times 24 + 96 \times 4 = 528 \text{ bits} = 66 \text{ octets.}$$

Then 4 instances may be needed. Note that there can be up to only 32 3G neighbor cells per 3G technology (FDD, TDD or CDMA2000), i.e. one technology fits in 2 Packet System Information instances (34 octets).

Note that such a coding could also be used for GSM neighbor cells, even if it is less optimized that the one proposed above.

The Reduced-PLMN-id list and the PLMN-id list can be broadcast, following the same principle, also in a new System Information, on BCCH. Indeed, on BCCH, the network also broadcasts the list of 3G neighbor cells.

### Solution 3 for GSM-to-3G cell reselection for the case of missing frequency coordination of the 3G PLMNs

The following solution is foreseen for the case that the 3G (e.g. UMTS) PLMNs share the frequencies available for 3G PLMNs in a not coordinated manner, that means in such a way that different 3G PLMNs in a same geographical location may use the same frequencies. The 3G PLMN shall be an example of PLMN with another technology.

If in such environment an MS is to change from a GSM PLMN to a 3G (e.g. UMTS) PLMN, a similar solution as the one described above is used in order to enable the MS to derive the PLMN-id of the 3G neighbor cells.

This solution makes use of the fact that in a given cell a UTRAN (FDD or TDD) Frequency represents one and only one PLMN, a unique PLMN. In other words: One central frequency is activated in only one PLMN.

According to the invention, the central frequencies are used for distinguishing in an MS, i.e. locally, PLMNs, from one another.

For this purpose, the network broadcast an list of PLMN-ids, indexed in the order of the standardized ARFCN (Absolute Radio Frequency Channel Number) such that it appears in the 3G neighbour cell list.

Also here the filtering of the receivable base stations out of the list of PLNM-ids takes into account the UTRAN frequency information, which is present in the PLMN and is broadcast by the serving cell, and a list of Equivalent PLMNSs already present in the MS. The following coding is also proposed:

{ 0 | 1 < PLMN-ld : bit (24) > }*number of FDD frequencies

{ 0 | 1 < PLMN-ld : bit (24) > }*number of TDD frequencies

The choice "0" allows to indicate that the PLMN-id is the same as the previous one.

Since, a given cell shall not declare more than 3 FDD frequencies and 3 TDD frequencies, there shall then be up to 6 PLMN-ids to declare (which fits in 150 bits). Then, one instance of PSI xy should be enough.

Such a configuration, in a given cell, should be the most likely one.

### Solution 4 for GSM-to-GSM cell reselection: Broadcasting a complete PLMN-id list

A list of neighbour PLMN-ids is broadcast in the Packet System Information (PSI), with the same order as in the neighbouring cell list, so that the MS can retrieve the PLMN-id of each cell, as described above. In PSI xx, the following coding is proposed:

{ 0 | 1< PLMN-Id : bit (24) > }** so that 6 PLMN codes are coded in 150 bits.

The 0 choice indicates that the current cell belongs to the same PLMN as the preceding one.

One instance of the new Packet System Information (PSI type xx) may include up to 6 PLMN-ids (one PLMN-id fits into 3 octets). The PLMN-ids shall follow the order of the GSM neighbor cell list.

Since we may have 32 GSM neighbor cells, there may be up to 32 different PLMN-ids which would require 6 PSI xx instances.

This is quite straightforward, but it is not optimised in terms of coding, and may require too much additional Packet System Information.

### Claims

**1.** A method of selecting one base station out of the number of all base stations receivable by a mobile station which is in position to possibly select such base station, when not all said base stations are operated by one and the same operator, **characterized by the steps of**

- broadcasting a list of PLMN identifications of all receivable base stations by at least one of the base stations, said list being ordered and indexed like arranged the respective Network Color Codes NCC,
- in said mobile station filtering the receivable base stations out of said list of PLMN identifications, taking into account the NCCs which are contained in the base station identifications of neighbor cells received by the mobile station from a serving base station and further taking into account a list of Equivalent PLMNs already present in the mobile station.

**2.** A base station able to offer communication's connections to a multiple of mobile stations with receiving means for receiving transmissions of any of said mobile stations and transmitting means for transmitting a list of all base stations receivable by said one of said mobile stations, **characterized in that** said list is a list of PLMN identifications of all receivable base stations, said list being arranged like the Network Color Codes NCC.

**3.** A mobile phone, commonly called a mobile station MS, able to select one base station out of the number of all base stations receivable by said mobile station, with transmitting means for transmitting to one of said base stations and receiving means for receiving a list of all receivable base stations from said one of said base stations, **characterized in that** said mobile station further includes filtering means for filtering the receivable base stations out of said list of PLMN-ids taking into account the NCCs which are contained in the base station identifications of neighbor cells received by the mobile station from a serving base station and further taking into account a list of Equivalent PLMNs already present in the mobile station.

4.  A method of selecting one base station out of the number of all base stations receivable by a mobile station which is in position to possibly select such base station, when not all said base stations are operated by one and the same operator, **characterized by the steps of**

    -   broadcasting a list of PLMN identifications of all receivable base stations by at least one of the base stations, said list being ordered and indexed
    -   wherein said list is a list of Reduced PLMN identifications and is implicitly indexed like the 3G neighbor cells list received by the mobile station from a serving base station,
    -   in said mobile station filtering the receivable base stations out of said list of Reduced PLMN-ids taking into account the 3G neighbor cell list and a list of Equivalent PLMNs already present in the mobile station.

5.  A base station able to offer communication's connections to a multiple of mobile stations with receiving means for receiving transmissions of any of said mobile stations and transmitting means for transmitting a list of all base stations receivable by said one of said mobile stations, **characterized in that** said list is a list of PLMN-identifications of all receivable base stations, said list being ordered and implicitly indexed in the same order as the 3G neighbor cell list.

6.  A mobile phone, commonly called a mobile station MS, able to select one base station out of the number of all base stations receivable by said mobile station, with transmitting means for transmitting to one of said base stations and receiving means for receiving a list of all receivable base stations from said one of said base stations, **characterized in that** said mobile station further includes filtering means for filtering the receivable base stations out of said list of PLMN codes based on the Reduced PLMN-id information and taking into account a list of Equivalent PLMNs already present in the mobile station.

7.  A method of selecting one base station out of the number of all base stations receivable by a mobile station which is in position to possibly select such base station, when not all said base stations are operated by one and the same operator, **characterized by the steps of**

    -   broadcasting a list of PLMN-ids of all receivable base stations by at least one of the base stations, wherein said list is ordered and indexed in the same order as the frequencies of neighbor PLMNs of another technology (UTRAN (FDD or TDD)),
    -   in said mobile station filtering the receivable base stations out of said list of PLMN-ids, taking into account the frequency information of the other PLMN (UTRAN (FDD or TDD)) which is present in the PLMN and in the mobile station and further taking into account a list of Equivalent PLMNs already present in the mobile station.

8.  A base station able to offer communication's connections to a multiple of mobile stations with receiving means for receiving transmissions of any of said mobile stations and transmitting means for transmitting a list of all base stations receivable by said one of said mobile stations, **characterized in that** said list is a list of PLMN-IDS of all receivable base stations, said list being ordered and implicitly indexed in the same order as the frequency list of PLMNs of another technology (UTRAN (FDD or TDD).

9.  A mobile phone, commonly called a mobile station MS, able to select one base station out of the number of all base stations receivable by said mobile station, with transmitting means for transmitting to one of said base stations and receiving means for receiving a list of all receivable base stations from said one of said base stations, **characterized in that** said mobile station further includes filtering means for filtering the receivable base stations out of said list of PLMN-ids, based on the frequency information of the other PLMN (UTRAN (FDD or TDD)) which is present in the PLMN and in the mobile station and further taking into account a list of Equivalent PLMNs already present in the mobile station.

**EP 1 353 521 A1**

## EUROPEAN SEARCH REPORT

**European Patent Office**

Application Number

EP 02 36 0118

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 13668 A (ERICSSON INC)<br>22 February 2001 (2001-02-22)<br>* the whole document * | 1-9 | H04Q7/32 |
| A | EP 1 094 681 A (HYUNDAI ELECTRONICS IND)<br>25 April 2001 (2001-04-25)<br>* abstract *<br>* column 18, line 40 - column 21, line 18 *<br>* column 7, line 58 - column 8, line 21 *<br>* figures 7,16-18 * | 1-9 | |
| A | EP 0 779 753 A (AT & T WIRELESS SERVICES INC) 18 June 1997 (1997-06-18)<br>* column 3, line 40 - column 4, line 38 *<br>* column 10, line 36 - column 11, line 43 *<br>* figures 2,8,9 * | 1-9 | |
| A | US 6 052 590 A (ABDELLA RICHARD MICHAEL ET AL) 18 April 2000 (2000-04-18)<br>* abstract *<br>* column 1, line 5 - column 2, line 18 *<br>* column 3, line 46 - column 4, line 54 * | 1-9 | TECHNICAL FIELDS SEARCHED (Int.Cl.7)<br><br>H04Q |
| A | "ETSI TS 123 122 V4.1.0: Universal Mobile Telecommunication System (UMTS); Non-Access-Stratum functions related to Mobile Station (MS) in idle mode (3GPP TS 23.122 version 4.1.0 Release 4"<br>ETSI TS 123 122 V4.1.0,<br>June 2001 (2001-06), pages 1-34,<br>XP002209390<br>* page 9 - page 10 *<br>* page 12 - page 18 * | 1-9 | |

-/--

The present search report has been drawn up for all claims

| Place of search | Date of completion of the search | Examiner |
|---|---|---|
| MUNICH | 9 August 2002 | Müller, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 353 521 A1**

European Patent
Office

**EUROPEAN SEARCH REPORT**

Application Number

EP 02 36 0118

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "ETSI TS 125 304 V5.0.0: Universal Mobile Telecommunication System (UMTS); UE Procedures in Idle Mode and Procedures for Cell Reselection in Connected Mode (3GPP TS 25.304 version 5.0.0 Release 5" ETSI TS 125 304 V5.0.0, March 2002 (2002-03), pages 1-41, XP002209391 * page 9 - page 13 * * page 35 * | 1-9 | |

TECHNICAL FIELDS
SEARCHED (Int.Cl.7)

The present search report has been drawn up for all claims

| Place of search | Date of completion of the search | Examiner |
|---|---|---|
| MUNICH | 9 August 2002 | Müller, N |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                EP 02 36 0118

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2002

| Patent document cited in search report | | Publication date | Patent family member(s) | | Publication date |
|---|---|---|---|---|---|
| WO 0113668 | A | 22-02-2001 | AU<br>WO | 6630500 A<br>0113668 A1 | 13-03-2001<br>22-02-2001 |
| EP 1094681 | A | 25-04-2001 | EP<br>JP | 1094681 A1<br>2001169329 A | 25-04-2001<br>22-06-2001 |
| EP 0779753 | A | 18-06-1997 | US<br>CA<br>EP<br>US | 6418318 B1<br>2188329 A1<br>0779753 A2<br>2002098848 A1 | 09-07-2002<br>13-06-1997<br>18-06-1997<br>25-07-2002 |
| US 6052590 | A | 18-04-2000 | NONE | | |